# EUROPEAN PATENT SPECIFICATION

(11) **EP 1 177 719 B1**
(45) Date of publication and mention of the grant of the patent: **07.05.2014**
(21) Application number: 01116895.2
(22) Date of filing: 11.07.2001
(51) Int. Cl.: A01F 12/44

(54) **Sucking blower for combines with a rotary threshing and separation unit**
Absauggebläse für Mähdrescher mit Dresch- und Abscheiderotor
Ventilateur aspirant pour moissonneuse-batteuse munie d'une unité rotative de battage et de séparation

(30) Priority: 01.08.2000 GB 0018712
(43) Date of publication of application: 06.02.2002
(73) Proprietor: CLAAS Selbstfahrende Erntemaschinen GmbH, 33428 Harsewinkel (DE)
(72) Inventor: Visagie, Andrie, Bothaville 9660 (ZA); Barrelmeyer, Thomas, 33775 Versmold (DE)

(56) References cited:
- DE-A- 2 620 875
- DE-A- 19 624 733
- US-A- 4 869 272
- PATENT ABSTRACTS OF JAPAN vol. 1998, no. 12, 31 October 1998 (1998-10-31) & JP 10 191767 A (MITSUBISHI AGRICULT MACH CO LTD), 28 July 1998 (1998-07-28)
- PATENT ABSTRACTS OF JAPAN vol. 1995, no. 08, 29 September 1995 (1995-09-29) & JP 07 115839 A (KUBOTA CORP), 9 May 1995 (1995-05-09)

## Description

This invention relates to a combine harvester which is equipped with a rotary threshing and separation unit, which consists of at least one rotor housing with sieve means having sieve openings therein and a rotor element which is arranged rotatably driven inside of the rotor housing, a grain collecting element which is arranged in some distance towards the sieve means, a cleaning apparatus which receives the grain collected from the grain collecting element, and a sucking blower which generates a sucking air flow stream.

Axial flow combines with rotary threshing and separation units are well known in the art. With the term "rotary threshing and separation unit" there is meant an element which at least separates grain kernels from a harvested material which is fed through the rotary threshing and separation unit. Usually, the working elements of a separation rotor also touch and beat the harvested material, and this beating can also be understood as a threshing action. There can also be arranged special elements on the rotor element and additionally on the internal surface of the rotor housing, such as special beaters and rasp bars, which effect a special threshing effect, but they are not necessary for the rotary threshing and separation unit. This invention is also not influenced if there are additional threshing elements arranged outside of the rotary threshing and separation unit. Such rotary threshing and separation units may be arranged in a lengthwise direction or transversely in relation to the travelling direction of the combine harvester, and there may be one or two rotor housings being arranged on the same or on different levels, they may be arranged horizontally or inclined with an angle, and there may be arranged one or more rotors in one rotor housing, and they may rotate in the same or opposite direction.

The general advantage of the rotary threshing and separation units is their high separation capacity due to the high centrifugal forces they can apply upon the harvested material being fed through the rotor housing. However, as a result of the high separation capacity, not only the grain kernels, but also chaff and broken straw may be separated from the harvested material, and from this mixed fraction all non-grain-kernel components need to be separated to achieve a clean sample of grain kernels which can be collected In the grain bin. Usually, this cleaning process is achieved by a special cleaning apparatus. Such a cleaning apparatus can be a conventional sieve, through which a cleaning wind is blown from the bottom. Whereas the heavier grain kernels fall through the sieve openings, the lighter fractions like chaff and broken straw are carried away by the cleaning wind and blown out of the combine. Also other embodiments of a cleaning apparatus are known in the art. All of them are faced with the problem that their capacity may not be as high as the separation capacity of the rotary threshing and separation unit, and so the capacity of the cleaning apparatus is the factor which limits the total throughput capacity of the whole combine harvester.

Accordingly, several attempts have been made to raise the cleaning capacity of the combine harvester. In US 4,869,272 it is suggested to use a cross-flow fan located adjacent the inlet end of the threshing cage to positively direct air past the cage to provide a more efficient separation of the grain from the chaff or straw. However, the disadvantage of the embodiment disclosed is that it sucks the air out of the upper sieve area of the cleaning apparatus. By this, there is a very strong wind flowing through the initial portion of the sieves, and the grain kernels which pass that region tend to be torn upwards with the wind, so that they cannot fall down through the sieve openings of the cleaning apparatus. Beyond that region, there is nearly no wind passing the sieve openings, because all the wind from the cleaning apparatus is torn upwards into the direction of the cross-flow fan, so that there is nearly none cleaning action in this remaining section of the sieves. Due to the fact that there are two cross-flow fans arranged besides a single rotor housing, also an even wind pressure in lateral direction over the sieves is disturbed. As a result, the cleaning performance of the cleaning apparatus is adversely affected by the cross-flow fan.

Another attempt to increase the cleaning performance of a combine harvester by additional air flow stream generating means is described in DE 196 24 733. To avoid that the function of the cleaning apparatus is adversely affected, a sucking air flow stream is directed through the space between conventional straw walkers, which are used for separation of grain kernels from harvested material, and a grain collecting element arranged in some distance underneath the straw walkers. To be able to effectively suck away chaff and broken straw from grain kernels accumulating on the grain collecting element, high wind speeds are necessary. Due to the fact that the wind speed is increasing the closer one comes towards the sucking blower unit, the higher is the possibility that grain kernels which have been separated from the harvested material by the straw walkers do not fall onto the grain collecting element but are sucked into the sucking blower unit and blown out of the combine as losses. To avoid this, the air flow stream needs to be kept upon a relatively low level, and accordingly the separation effect especially in the front region of the straw walkers, where a high percentage of grain and chaff is separated, gets lost. This also applies for the embodiment shown in this document with a rotary threshing and separation unit. Another disadvantage is that due to the many openings in conventional straw walkers, the air flow stream generated by the sucking blower unit is sucked into the space underneath the straw walkers through these openings from the space above the straw walkers, and by this sucking air flow stream additional chaff and broken straw is sucked through the straw walker openings which should be avoided. As a result, the effect of this arrangement is very limited.

It is the subject of this invention to increase the cleaning capacity of a combine harvester by adding a sucking blower unit.

Such an increase of the cleaning capacity can be achieved if a conduit guides the air flow stream generated by the sucking blower unit from the free space uowardly. The air flow stream generated by the sucking blower unit is directed upwardly through the conduit which guides the air flow stream from the space between the rotor housing of the rotary threshing and separation unit and the grain collecting element around a portion of the rear half of the housing of the rotary threshing and separation unit towards the sucking blower unit. The advantage of this arrangement is on the one hand that relevant fractions of chaff and broken straw do not hinder the cleaning action of the cleaning apparatus because they are sucked away earlier, and on the other hand this can be done very effectively because the grain kernels cannot be sucked in by the sucking blower unit because the sucking blower entrance isn't in proximity towards the separation zone of the rotary threshing and separation unit. Instead, during the upward movement through the conduit the lighter fractions of the mixture separated from the harvested material and sucked into the conduit by the air flow stream generated by the sucking blower unit are whirled away from the grain kernels which might also have been sucked into the conduit, and the grain kernels can sink down through the conduit onto the grain collecting element which feeds these grain kernels into the conventional cleaning apparatus. This all happens so effectively that even more than 50 % of the chaff and broken straw portion can be sucked off by the sucking blower unit without increasing losses of the separation unit and cleaning apparatus. The rest can be easily handled by the conventional cleaning apparatus. With such an increase of cleaning capacity the overall performance of a combine can be lifted remarkably, because the cleaning capacity is no more the limiting factor, and one can afford to design the threshing and separation unit even more aggressively.

Other advantages are described by the elements mentioned in the subclaims.

If the shape of the conduit is defined by a front wall, a rear wall, and at least two further side walls, a simple and cheap to manufacture structure can be achieved. If the cross-section of the conduit is tightened in the direction of the sucking blower unit, the speed of the air flow stream can be maintained at least on a substantially constant level, so that nothing of the transported material gets lost, or the speed can even be accelerated. If the speed of the air flow stream in the conduit or in the region of the gaps under the section walls is variable by an adjustment of adjustment elements the setting of the machine can easily be adapted to the actual harvesting conditions and the crop which is to be harvested. If the inclination angle of the grain collecting element is variable, the movement of the grain kernels can be influenced. This is especially interesting in connection with a variation of the air flow stream speed, so that both settings can be adjusted towards a satisfactory function. As the sucking blower unit is arranged in a plane above the threshing and separation unit, there is enough space for placing such a component without impeding a function of an existing component of a combine harvester. It can also easily be coupled with the conduit, and there are short distances to other drivetrains. If the mixture of air, chaff and straw is blown out by the sucking blower unit through a downwardly directed duct, it is guided around all other components without influencing their function. The energy contained in the air flow stream is used to transport and spread the chaff and broken straw onto the ground. In the duct there may be arranged guiding vanes or loss sensors. A sucking blower unit can also be arranged on the side of the threshing and separation unit, and the sucking blower unit is connected with the conduit by a downwardly directed connecting duct. With such an arrangement the sucking blower unit can also be placed at a location where it doesn't impede the function of another component of a combine harvester. If the sucking blower unit feeds the mixture of air, chaff and broken straw by a duct into a chopper, an even distribution can be achieved.

If there is an angle between the general direction of the air flow stream in the free space underneath the threshing and separation unit and the general direction of the air flow stream in the conduit, a separation of grain kernels and chaff can be achieved due to the differing turning radius around that angle.

In another aspect of the invention besides a first discharge location for chaff and broken straw behind a first cleaning apparatus there is a second discharge location for chaff and broken straw which is sucked away from a region under the threshing and separation unit through a conduit by a sucking blower unit, and which blows a mixture of air, chaff and broken straw through a duct either on the ground or into a chopper at a second discharge location. This means that there are two independent transport paths for the chaff and broken straw which needs to be separated from the grain to be cleaned, and the one path works conventionally, and the other path work with a sucking blower unit. The big advantage of the second discharge location is that the cleaning function of the cleaning apparatus is not impeded by those fractions which are sucked off and discharged by totally different technical means, especially the wind pressure and discharge activity is not adversely affected.

If in all embodiments the sucking blower unit can be switched on or off, it is possible to adapt the use of the sucking blower unit to the requirements of the special harvesting situation. The combine harvester doesn't need additional engine power, because in dry conditions, where a lot of chaff and broken straw is produced, the separation rotors do not require much energy, and the void energy can be used for operating the sucking blower means, and in wet conditions when the separation rotor needs more power the sucking blower can be switched off because only few chaff and broken straw is produced.

It is also interesting to retrofit the respective components as an option kit.

The invention is described in more detail in conjunction with the drawings, in which
- Fig. 1: illustrates a side view partially broken away upon a self-propelled combine harvester,
- Fig. 2: shows a marked portion from Fig. 1 in more detail,
- Fig. 3: is an elevated cross-sectional view upon the threshing and separation unit and the sucking blower unit along the line III-III in Fig. 1,
- Fig. 4: is a side view upon an alternative embodiment of the invention,
- Fig. 5: shows an improvement how also fractions coming from a preparation pan can be separated by the sucking blower unit.

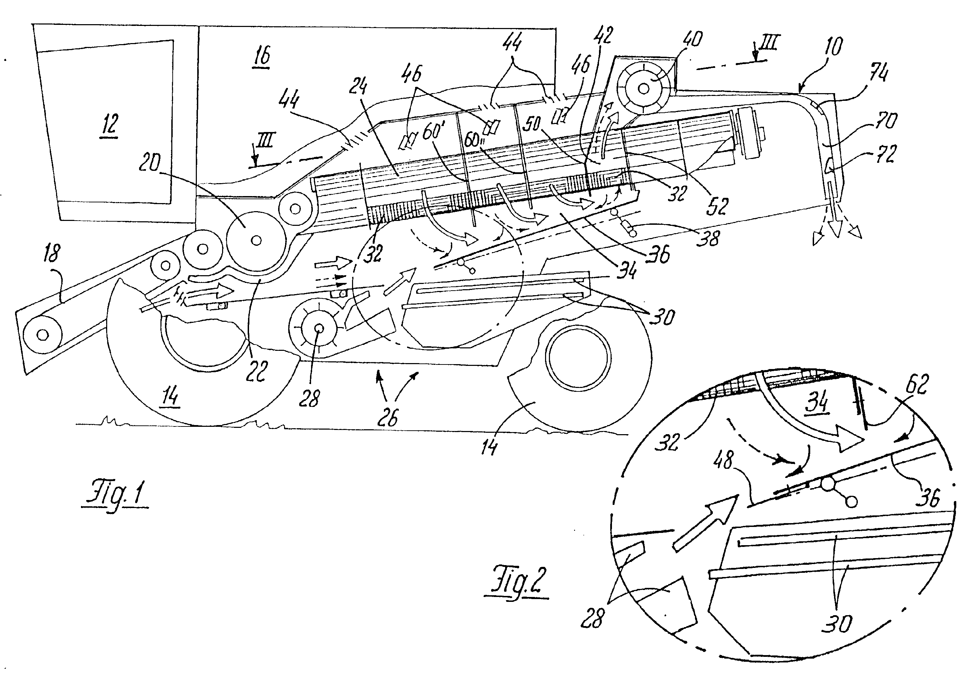

Referring first to Fig. 1, there is shown a self-propelled combine 10 which has a cabin 12 for the operator, wheels 14, a grain tank and engine compartment 16 which isn't shown in greater detail, a feeder house 18 to which a header can be attached to, a threshing drum 20 with a concave 22, a rotary threshing and separation unit 24, a cleaning apparatus 26 comprising of a blower unit 28 and cleaning sieves 30. The harvested material is cut or picked up by the header (not shown) and then fed into the combine 10 through the feeder house 18, it is threshed by the threshing drum 20 and the concave 22, and it is transported into the rotary threshing and separation unit 24. During a helical movement of the harvested material around the longitudinal axis of the threshing and separation rotor inside of the rotary threshing and separation unit 24 grain kernels are exiting the housing of the threshing and separation unit 24 through openings in sieve means 32. Also chaff and broken straw are exiting the threshing and separation unit 24. They all fall into a free space 34 which is closed at the bottom by a grain collecting element 36. The straw leaves the threshing and separation unit 24 at its discharge end, from where it may be chopped, if desired, and deposited on the field.

The grain collecting element 36 is shown as a return pan. Such a return pan comprises means for improving the transport function in relation to the grain kernels, which are supposed to be transported into the direction of the cleaning apparatus 26 against the air flow stream which is passing through the free space underneath the the threshing and separation unit 24. As an example for such means, a grain pan may be drivable in oscillating movements, or it may be designed as a driven conveyor belt. The grain collecting element 36 has a surface which is inclined towards the general combine level so that grain kernels which are falling on its surface can be moved towards the cleaning apparatus 26. There also may be step-like ribs formed into the surface of the grain collecting element 36, so that grain kernels can only move down the steps. The travelling path of the grain kernels is illustrated by the arrows shown in full lines, whereas the air flow stream is illustrated by the fat hollow arrows and the travelling path of chaff and broken.straw is indicated by the arrows shown with broken lines. It can be seen that in the free space 34 the transportation directions of the grain kernels on the one side and the chaff, broken straw and air flow stream on the other side are contrary. To improve the separation between the grain kernels lying upon the grain collecting element 36 and other fractions which still might pollute these grain kernels, there might be little openings in the surface of the grain collecting element 36 which allows air to be sucked through them into the free space 34. By this air stream through such openings an additional cleaning of the grain kernels lying on the grain collecting element 36 could be achieved.

The contrary movement of the air and the chaff and broken straw in the free space 34 is generated by the sucking blower unit 40 which sucks air through the conduit 42 from free space 34. The shape of conduit 42 is defined by a front wall 50, a rear wall 52 and side walls 54, 56, which may be identical to the side walls of the housing of the threshing and separation unit 24. The surrounding walls 50 - 56 are generally closed, so that the air flow stream generated by sucking blower unit 40 is forced to move along a direction in which it is forced by the side walls 50 - 56 of conduit 42. Due to the fact that the shape of the side walls 50 - 56 of conduit 42 forms a duct which is directed upwards, also the air flow stream with all components it carries with it is forced into this upwardly directed destination.

To achieve a continuous air flow stream, air is allowed to enter the area of free space 34 through air inlet openings. Such openings can be positioned at the top on the housing of the threshing and separation unit 24, which are shown as openings 44, they can be positioned in the side walls of the housing as openings 46, and air may also be sucked in through the concave 22 and the feeder house 18 or other openings, which are not all shown, in the front of the combine, through the cleaning apparatus 26 and also through the openings in sieve means 32, also in a singular or any combined appropriate use of said air inlets. If there are air inlet openings arranged in the front of the combine, it is possible to lead an air flow stream through a space underneath the concave 22 over the preparation pan, where also a mixture of grain and chaff is accumulated and moved towards the cleaning apparatus 26. This air flow stream is then capable of not only collecting chaff and broken straw from the free space 34 underneath the threshing and separation unit 24, but also from the material accumulated on the preparation pan. If the air flow stream is strong enough, the material flow becomes fluidised, which allows a very good separation of the different fractions of material.

To achieve a safe transport of the grain kernels towards the cleaning apparatus, the inclination angle of the grain collecting element 36 and the speed of air stream passing through free space 34 need to be adapted to each other. Favourable results can be achieved, if the speed of the air stream can be varied, for example by varying the speed of sucking blower unit 40, e.g. by operating variator discs on a pulley drive, or by changing the open cross-section of air inlet openings or by opening a by-pass close to the sucking blower unit 40, or if the inclination angle of grain collecting element 36 can be changed, for example by a hydraulic cylinder 38, or a combination of these measurements. With such measurements, an adaption of the settings to achieve a different speed of the air flow stream for different kinds of crops to be harvested can be achieved easily.

It is also important to create a strong air flow stream close to the surface of the grain collecting element 36. Therefore, it is necessary to create a closed housing through which a defined air flow stream can flow. The free space 34 is closed in its end region towards conduit 42 by an upstanding wall which may be laterally arranged upon the grain collecting element and tightened against the conduit 42 e.g. by rubber lips or other flexible elements. Towards the sides, the free space 34 may be closed by the side walls of the housing in which the threshing and separation unit 24 is mounted. The closed housing through which an air flow stream is guided may even be extended up to the front wall of the combine, if an air flow stream also in that region shall be effected by the sucking blower unit. To allow an air flow stream to flow, there of course needs to be air inlet openings in favourable positions through which air can be sucked into the housing.

Close to the surface of the grain collecting element, it is quite easy to control the speed of the air flow stream, as it will be explained now. Otherwise, it is difficult to blow the light particles like chaff and broken straw away from the grain kernels. If the wind speed is slowed down below a certain level, the air flow stream is not able to keep the chaff and broken straw fractions still flying in the wind. As a consequence, these fractions will fall down, accumulate and block the machine. Instead of increased performance downtime would be the consequence. To keep the air flow stream close to the surface of the grain collecting element 36, it is advantageous to create wind sections in the upper portion of the housing of the threshing and separation unit 24 which are separated from each other by transversally arranged section walls 60', 60". A section wall 60', 60" closes a section from one side of the housing to the other side, and it reaches from the top of the housing under the sieve means 32. It completely encircles the rotor housing of the threshing and separation unit 24. Accordingly, an air flow stream generated by the sucking blower unit 40 can pass such a section wall 60', 60" only at the gap which is defined by a lower edge of a section wall, the side walls of the housing and the surface of the grain collecting element 36. By a sequence of such gaps in longitudinal direction with respectively limited cross-sections an acceleration of the air flow stream can be achieved. At least, by a sequence of several section walls 60', 60" the wind speed can substantially be maintained on a desired level. It is possible to suck at least a portion of air through a single wind section by air inlet openings 44, 46 arranged in the upper portion of the housing. By this a quick accumulation of chaff upon the rotor housing of the threshing and separation unit 24 can be avoided, because a continuous downwardly directed air flow stream blows chaff downwardly. It is also advantageous if the lengthwise position of section walls 60', 60" can be varied. By this, it is possible to influence the length of the air flow stream streaming over the grain collecting element 36, and the position of the gaps, where the air flow stream is accelerated, can be influenced.

It can be very well seen in Fig. 1 that there is an angle between the general direction of the air flow stream moving over the surface of the grain collecting element and the general direction of the air flow stream moving through the conduit 42. In the bend of the air flow stream between the first and second direction the fractions moving in the air flow stream have a different route of movement, mainly dependent from their specific weight. Accordingly, as a result of that bend, there also occurs a separation between grain kernels, which tend to be thrown against the rear wall 52, because they have a bigger turning radius, and from there fall down onto the grain collecting element 36, and the lighter fractions like chaff and broken straw which a smaller turning radius due to their lighter weight and are sucked upwardly through the conduit 42 into the direction of the sucking blower unit 40.

It is also advantageous if the cross-section of the conduit 42 is tightened in the direction towards the sucking blower unit 40, because by this measurement the air flow speed can be accelerated, and it can be avoided that chaff and broken straw floating in the air flow stream sinks down and settles at an undesired location.

As shown in Fig. 2, the length of the grain collecting element 36 may be variable by an adjustment of the releasably fixed extension plate 48, on the one hand to control the air volume which is sucked out of the cleaning apparatus 26, and on the other hand to control the location where the collected grain falls into the cleaning apparatus 26. It is advantageous to limit the air volume which is sucked from the cleaning apparatus 26, because if the air volume sucked from that region becomes too big, the function of the cleaning apparatus 26 is adversely affected. It is also an advantage if the direction of the grain kernels falling down from the grain collecting element 36 can directly be guided into the wind flow resulting from blower unit 28 because then the wind can easily blow away rests of chaff and broken straw which may still be mixed with the grain kernels. However, there still needs to be enough clearance left between the exposed end of the extension plate 48 or the grain collecting element 36 and the upper surface of sieve means 30, to allow the wind generated by blower unit 28 to pass this gap and to transport light fractions like chaff and broken straw out of the combine harvester. Also the section walls 60', 60" may be extendable by releasably fixed extension elements 62. By an adjustment of these extension elements 62 the wind speed at this location can be controlled.

The mixture of air, chaff and broken straw sucked in by the sucking blower unit 40 is blown out to the rear. In Fig. 1, there is shown a duct 70 which directs the mixture downwards onto the field. There may be arranged guiding vanes 72 which are curved and positioned inside the duct housing so that a lateral distribution of the chaff and broken straw can be achieved. It should be noted that the air flow stream should not adversely affect a swath laid down by the combine by blowing an air flow stream directly into the swath. Accordingly, the swath of straw keeps its shape if the mixture of air, chaff and broken straw is blown out into a more sideward direction, which can also be achieved by respective guiding vanes 72. If a chopping of the straw is desired, it is possible to guide the duct 70 into a chopper, then the air flow stream supports the lateral distribution of the chopped straw, and mixing the chaff and broken straw with the chopped straw an even lateral distribution of all fractions can be achieved. In the duct 70 there may also be arranged loss sensors 74 which indicate to the operator whether there occur sucking blower losses.

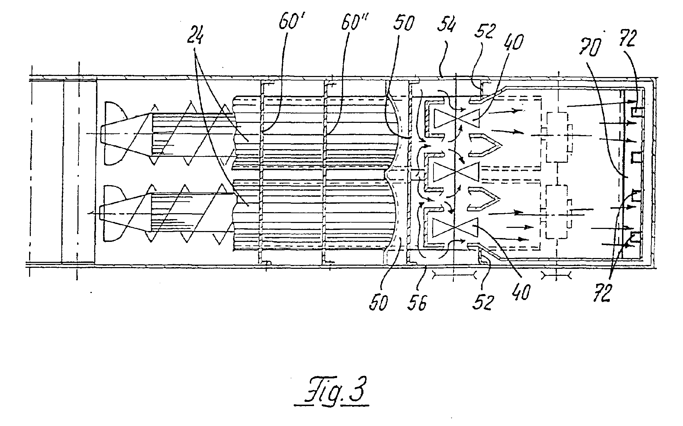

In Fig. 3, the rotary threshing and separation unit 24 comprises of two rotor housings with one separation rotor inside each of them. The conduit 42 is defined by the front wall 50, the rear wall 52, and the two side walls 54, 56. Also the section walls 60', 60" can be seen. In each wind section and also in the conduit 42 one can see the two openings between the side walls of the combine housing and the rotor housings of the threshing and separation unit, and the third opening between the two rotor housings. Whereas in the forward wind sections there only may be some wind passing these three openings in a downward direction, if air inlet openings are open, in the conduit there is the sucked air flow stream passing these three openings with high speed in an upward direction. Because the wind speed in these openings laterally towards the threshing and separation unit 24 is very high, grain kernel losses which are exiting the threshing and separation unit 24 through the sieve openings in that region can be avoided if lateral openings in the sieve means in that regions are closed. By a partial closure of sieve openings the grain kernels can exit the threshing and separation unit 24 in that region mainly only in a direction towards the grain collecting element 36. The embodiment shown in Fig. 3 shows a sucking blower unit 40 comprising of three radial blower elements, which are sucking in the mixture of air, chaff and broken straw from the sides and which blow the air stream away rearwardly. The downwardly directed duct 70 with a plurality of guiding vanes 72 can also be seen.

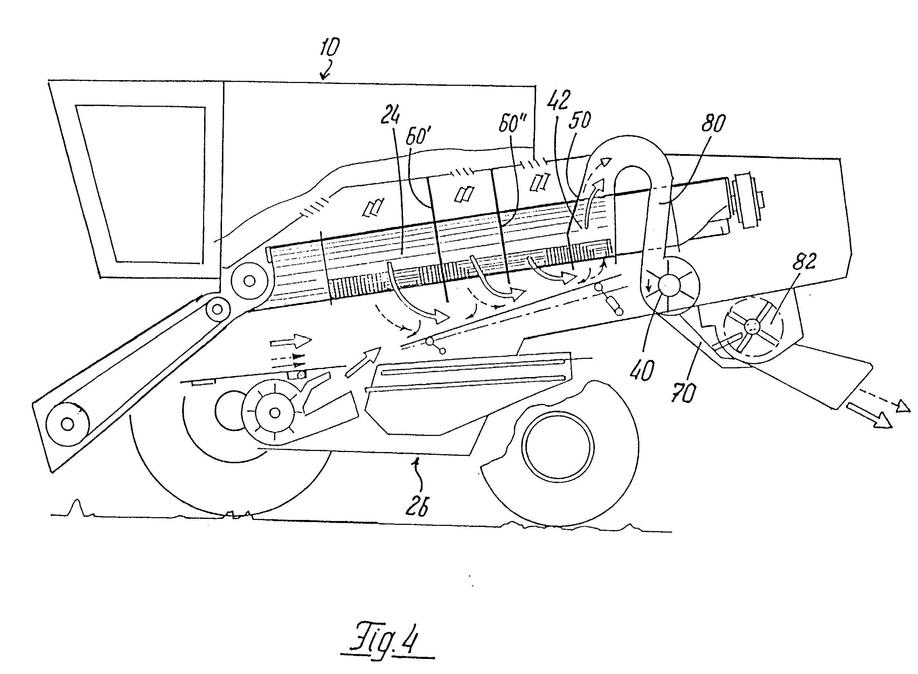

An alternative embodiment of the invention is shown in Fig. 4. Instead of arranging the sucking blower unit 40 above the threshing and separation unit 24, it is positioned at the side or underneath of the threshing and separation unit 24. Respectively, the sucking blower unit 40 may consist of two units placed on the sides of the rear hood of the combine harvester 10, or it may be just one unit which is placed underneath the threshing and separatio unit 24 and which reaches substantially over the whole width of the combine housing in that region. To achieve this arrangement, it is necessary that behind the conduit 42 which is directed upwardly there must be a connecting duct 80 which leads the mixture of air, chaff and broken straw downwardly again into the sucking blower unit 42. This arrangement has the advantage that the duct 70 can lead the mixture of air, chaff and broken straw into the chopper by which it is distributed over the field. The sucking blower unit 40 is here shown as a rotor blower. In another embodiment, it is also possible to combine the function of a sucking blower unit 40 and a chopper 82 in one single element, and to suck an air flow stream through conduit 42 and the connecting duct 80 directly into the chopper housing. Such a result can be achieved if the chopper comprises elements which are capable of producing a voluminous air flow stream. It is advantageous to place the sucking blower unit in proximity towards the outlet opening of the threshing and separation unit, because then the chopping blower unit 40 can be driven easily and it is possible to distribute the chaff and broken straw fraction together with the straw coming out of the threshing and separation unit 24, and the air flow stream resulting from the action of the sucking blower unit also supports the lateral distribution of chopped straw, chaff and broken straw. Albeit the sucking blower unit 40 is only shown in positions above or underneath the threshing and separation rotor unit 24 in the drawings, it can of course also be positioned behind the threshing and separation unit 24, however, such an arrangement has the disadvantage that the length of the combine increases. If that aspect isn't Important, also this position can be used.

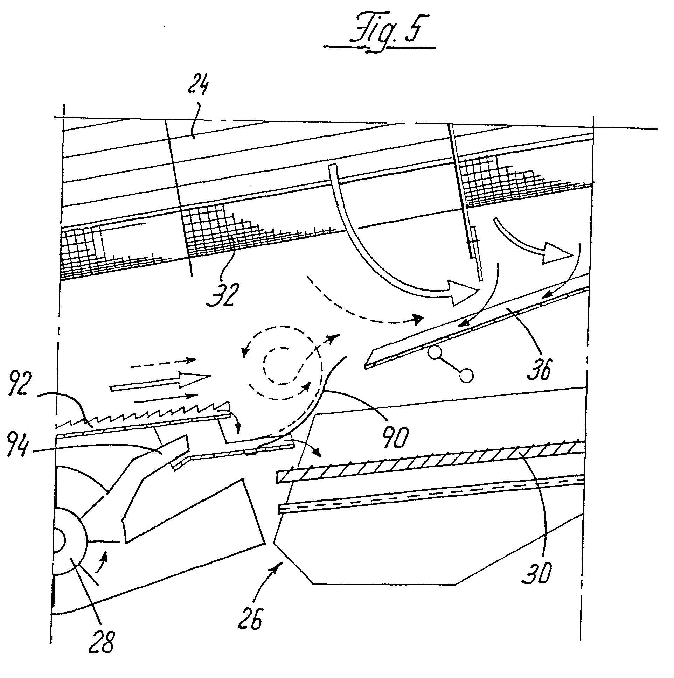

In Fig. 5 there can be seen a guiding element 90 which is arranged in the transfer zone from the grain collecting element 36 and the preparation floor 92 towards the cleaning apparatus 26. The guiding element 90 is directed from an outblow channel 94 from the blower unit 28 towards the free space 34 through which an air flow stream is sucked by the sucking blower unit 40. If a layer of chaff, broken straw and grain kernels reaches the end of preparation floor 92, most of the grain kernels are lying directly on the preparation floor, and the lighter fractions like chaff and broken straw are lying above them. The guiding element 90 comprises of a plurality of fingers or lashes, or it is designed like a comb or a web, so that there are openings between the single fingers or wires. If the grain kernels fall down from the preparation floor, they fall through these openings onto sieve means 30. The more bulky and lighter fractions of chaff and broken straw, however, are retained by the guiding element 90 from falling onto the sieve means 30. Now the air flow stream generated by blower unit 28 and exiting the blower housing through outblow channel 94 grabs these fractions and whirls them upwardly into the transfer zone through which also the air flow stream generated by the sucking blower unit 40 is moving. Here these fractions can be grabbed by the sucked air flow stream towards the sucking blower unit 40, and by this it is avoided that these fractions might limit the cleaning action of the cleaning apparatus 26. If the geometries are adapted correctly, it is possible that also the material which is distributed by the grain collecting element 36 into the transfer zone reaches the zone where the air flow streams are effective, and that also fractions of that material are sucked away towards the sucking blower unit 40.

## Claims

1. Combine harvester (10) which is equipped with a rotary threshing and separation unit(24), which consists of at least one rotor housing with sieve means (32) having sieve openings therein and a rotor element which is arranged rotatably driven inside of the rotor housing, a grain collecting element (36) which is arranged in some distance towards the sieve means(32), a cleaning apparatus (26) which receives the grain collected from the grain collecting element (36), and a sucking blower (40) which generates a sucking airflow stream, which is guided from a free space (34) between the rotor housing of the rotary threshing and separation unit (24) and the grain collecting element (36) around a portion of the rear half of the rotor housing of the rotary threshing and separation unit (24) towards the sucking blower unit (40),
**characterized in,**
**that** a conduit (42) directs the air flow stream generated by the sucking blower unit (40), which is arranged in a plane above the threshing and separation unit (24), from the free space (34) upwardly.

2. Combine harvester (10) according to claim 1,
**characterized in,**
**that** the shape of the conduit (42) is defined by a front wall (50), a rear wall (52), and at least two further side walls (54, 56).

3. Combine harvester (10) according to claim 1 or 2,
**characterized in,**
**that** the cross-section of the conduit (42) is tightened in the direction of the sucking blower unit (40).

4. Combine harvester (10) according to one or more of the preceding claims,
**characterized in,**
**that** a path for an airflow stream is defined above the surface of a grain collecting element (36) by one or more laterally extending section walls (60', 60") which close a respective wind section to the upper region of a combine housing and which allow an air flow stream to pass through a gap between its lower end and the surface of the grain collecting element (36).

5. Combine harvester (10) according to one or more of the preceding claims,
**characterized in,**
**that** the speed of the air flow stream in the conduit or in the region of the gaps under the section walls (60', 60") is variable by an adjustment of adjustment elements (48, 62).

6. Combine harvester (10) according to one or more of the preceding claims,
**characterized in,**
**that** the inclination angle of the grain collecting element (16) is variable.

7. Combine harvester (10) according to one or more of the preceding claims,
**characterized in,**
**that** the mixture of air, chaff and straw is blown out by the sucking blower unit (24) through a downwardly directed duct (70).

8. Combine harvester (10) according to claim 7,
**characterized in,**
**that** in the downwardly directed duct (70) there are arranged guiding vanes (72).

9. Combine harvester (10) according to claim 7 or 8,
**characterized in,**
**that** in the downwardly directed duct (70) there are positioned loss sensors (74).

10. Combine harvester (10) according to one or more of claims 1 to 6,
**characterized in,**
**that** a sucking blower (10) unit is arranged on the side or underneath of the threshing and separation unit (24), and the sucking blower unit (40) is connected with the conduit (10) by a downwardly directed (70) connecting duct.

11. Combine harvester(10) according to claim 10,
**characterized in,**
**that** the sucking blower unit (40) feeds the mixture of air, chaff and broken straw by a connecting duct (80) into a chopper (82).

12. Combine harvester (10) according to one or more of the preceding claims,
**characterized in,**
**that** there is an angle between the general direction of the air flow stream in the free space (34) underneath the threshing and separation unit (24) and the general direction of the air flow stream in the conduit (42).

13. Combine harvester (10) which is equipped with a rotary threshing and separation unit (24), which consists of at least one rotor housing with sieve means (32) having sieve openings therein and a rotor element which is arranged rotatably driven inside of the rotor housing, a grain collecting element (36) which is arranged in some distance towards the sieve means(32), a cleaning apparatus (26) which receives the grain collected from the grain collecting element (36), the cleaning apparatus (26) having a first discharge l'ocation for chaff and broken straw, and a suckingbtewer unit (40) which generates a sucking air flow stream,
**characterized in,**
**that** besides the first discharge location for chaff and broken straw behind the cleaning apparatus (26) there is a second discharge location for chaff and broken straw which is sucked away from a region under the threshing and separation unit (24) through a conduit (42) by the sucking blower unit (40), and which blows a mixture of air, chaff and broken straw through a duct (80) either on the ground or into a chopper (82) at a second discharge location

14. Combine harvester (10) according to one or more of the preceding claims,
**characterized in,**
**that** the sucking blower unit (24) can be switched on or off.

15. Combine harvester (10) according to one or more of the preceding claims,
**characterized in,**
**that** the conduit (42, 70, 80) can be offered as a retrofit package.

16. Combine harvester (10) according to one or more of the preceding claims,
**characterized in,**
**that** there are air inlet openings in the front, the side walls or the top of the housing of the combine (10).

17. Combine harvester (10) according to one or more of the preceding claims,
**characterized in,**
**that** there is a guiding element (90) arranged in the transfer zone from the grain collecting element (36) an a preparation floor(92) towards the cleaning apparatus (26), and the guiding element (90) is fixed in proximity to anoutblowohannel (94) of a blower unit (28) of the cleaning apparatus (26) and is directed towards the free space (34) through which an air flow stream is sucked by the sucking blower unit (24).

## Patentansprüche

1. Mähdrescher (10), der mit einer drehenden Dresch- und Trenneinheit (24) versehen ist, die aus mindestens einem Rotorgehäuse mit einem Siebmittel (32) besteht, das Sieböffnungen hat, und einem Rotorelement, das drehbar angetrieben innerhalb des Rotorgehäuses eingerichtet ist, ein Kornauffangelement (36), das in einer bestimmten Entfernung zu dem Siebmittel (32) eingerichtet ist, und ein Reinigungsgerät (26), das das aufgefangene Korn von dem Kornauffangelement (36) erhält, und ein Sauggebläse (40), das einen Saugluftstrom erzeugt, der von einem freien Raum (34) zwischen dem Rotorgehäuse und der drehenden Dresch- und Trenneinheit (24) und dem Kornauffangelement (36) um einen Teil der hinteren Hälfte des Rotorgehäuses der drehenden Dresch- und Trenneinheit (24) zu der Sauggebläseeinheit (40) geführt wird,
**dadurch gekennzeichnet,**
**dass** eine Leitung (42) den Luftstrom, der von der Sauggebläseeinheit (40) erzeugt wird, die in einer Ebene oberhalb der Dresch- und Trenneinheit (24) aufwärts von dem freien Raum (34) eingerichtet ist, lenkt.

2. Mähdrescher (10) nach Anspruch 1,
**dadurch gekennzeichnet,**
**dass** die Form der Leitung (42) von einer Vorderwand (50), einer Rückwand (52) und mindestens zwei weiteren Seitenwänden (54, 56) definiert ist.

3. Mähdrescher (10) nach Anspruch 1 oder 2,
**dadurch gekennzeichnet,**
**dass** der Querschnitt der Leitung (42) in die Richtung der Sauggebläseeinheit (40) verengt ist.

4. Mähdrescher (10) nach einem oder mehreren der vorhergehenden Ansprüche, **dadurch gekennzeichnet,**
**dass** ein Weg für einen Luftstrom oberhalb der Oberfläche eines Kornauffangelements (36) von einer oder mehreren sich seitlich erstreckenden Abschnittwänden (60', 60") definiert ist, die einen jeweiligen Windabschnitt zu dem oberen Bereich eines kombinierten Gehäuses schließen, und die es einem Luftstrom erlauben, durch eine Spalte zwischen seinem unteren Ende und der Oberfläche des Kornauffangelements (36) durchzugehen.

5. Mähdrescher (10) nach einem der vorhergehenden Ansprüche,
**dadurch gekennzeichnet,**
**dass** die Drehzahl des Luftstroms in der Leitung (42) oder in dem Bereich der Spalten unter den Abschnittwänden (60', 60") durch eine Anlassung von Anpasselementen (48, 62) veränderlich ist.

6. Mähdrescher (10) nach einem oder mehreren der vorhergehenden Ansprüche, **dadurch gekennzeichnet,**
**dass** der Neigungswinkel des Kornauffangelements (16) veränderlich ist.

7. Mähdrescher (10) nach einem oder mehreren der vorhergehenden Ansprüche,
**dadurch gekennzeichnet,**
**dass** das Gemisch aus Luft, Häcksel und Stroh aus der Sauggebläseeinheit (24) durch eine nach unten gerichtete Leitung (70) heraus geblasen wird.

8. Mähdrescher (10) nach Anspruch 7,
**dadurch gekennzeichnet,**
**dass** in der abwärts gerichteten Leitung (70) Leitschaufeln (72) eingerichtet sind.

9. Mähdrescher (10) nach Anspruch 7 oder 8,
**dadurch gekennzeichnet,**
**dass** in der abwärts gerichteten Leitung (70) Verlustsensoren (74) positioniert sind.

10. Mähdrescher (10) nach einem oder mehreren der Ansprüche 1 bis 6,
**dadurch gekennzeichnet,**
**dass** eine Sauggebläseeinheit (10) auf der Seite oder unterhalb der Dresch- und Trenneinheit (24) eingerichtet ist, und dass die Sauggebläseeinheit (40) mit der Leitung (10) durch eine nach unten gerichtete Verbindungsleitung (70) verbunden ist.

11. Mähdrescher (10) nach Anspruch 10,
**dadurch gekennzeichnet**
**dass** die Sauggebläseeinheit (40) das Gemisch aus Luft, Häcksel und gebrochenem Stroh durch eine Verbindungsleitung (80) in einen Häcksler (82) einspeist.

12. Mähdrescher (10) nach einem oder mehreren der vorhergehenden Ansprüche,
**dadurch gekennzeichnet,**
**dass** ein Winkel zwischen der allgemeinen Richtung des Luftstroms in dem freien Raum (34) unterhalb der Dresch- und Trenneinheit (24) und der allgemeinen Richtung des Luftstroms in der Leitung (42) besteht.

13. Mähdrescher (10), der mit einer drehenden Dresch- und Trenneinheit (24) ausgerüstet ist, die aus mindestens einem Rotorgehäuse mit einem Siebmittel (32) besteht, das Sieböffnungen hat, und aus einem Rotorelement, das drehbar angetrieben innerhalb des Rotorgehäuses eingerichtet ist, ein Kornauffangelement (36), das in einer bestimmten Entfernung zu dem Siebmittel (32) eingerichtet ist, ein Reinigungsgerät (26), das das Korn erhält, das von dem Kornauffangelement (36) aufgefangen wird, wobei das Reinigungsgerät (26) eine erste Entladestelle für Häcksel und gebrochenes Stroh und eine Sauggebläseeinheit (40), die einen Saugluftstrom erzeugt, hat, **dadurch gekennzeichnet,**
**dass** sich neben der zweiten Entladestelle für Häcksel und gebrochenes Stroh hinter dem Reinigungsgerät (26) eine zweite Entladestelle für Häcksel und gebrochenes Stroh befindet, die von einem Bereich unterhalb der Dresch- und Trenneinheit (24) durch eine Leitung (42) durch die Sauggebläseeinheit (40) abgesaugt wird, und die ein Gemisch aus Luft, Häcksel und gebrochenem Stroh durch eine Leitung (80) entweder auf den Boden oder in einen Häcksler (82) an einer zweiten Entladestelle bläst.

14. Mähdrescher (10) nach einem oder mehreren der vorhergehenden Ansprüche, **dadurch gekennzeichnet,**
**dass** die Sauggebläseeinheit (24) ein- oder ausgeschaltet sein kann.

15. Mähdrescher (10) nach einem oder mehreren der vorhergehenden Ansprüche, **dadurch gekennzeichnet,**
**dass** die Leitung (42, 70, 80) als Nachrüstpackage angeboten werden kann.

16. Mähdrescher (10) nach einem oder mehreren der vorhergehenden Ansprüche, **dadurch gekennzeichnet,**
**dass** Lufteinlassöffnungen in der Vorderwand, den Seitenwänden oder der Oberseite des Gehäuses des Mähdreschers (10) bestehen.

17. Mähdrescher (10) nach einem oder mehreren der vorhergehenden Ansprüche, **dadurch gekennzeichnet,**
**dass** ein Führungselement (90) besteht, das in der Transferzone von dem Kornauffangelement (36) und einem Vorbereitungsboden (92) zu dem Reinigungsgerät (26) eingerichtet ist, und dass das Führungselement (90) in der Nähe eines Ausblaskanals (94) einer Gebläseeinheit (28) des Reinigungsgeräts (26) befestigt und zu dem freien Raum (34), durch den ein Luftstrom von der Sauggebläseeinheit (24) gesaugt wird, gerichtet ist.

## Revendications

1. Moissonneuse-batteuse (10) équipée d'une unité de battage et de séparation rotative (24), qui consiste en au moins un logement de rotor muni d'un moyen de tamisage (32) comportant des ouvertures de tamis et un élément de rotor qui est placé de façon à être entraîné en rotation à l'intérieur du logement de rotor, un élément collecteur de céréales (36) qui est placé à une certaine distance vers le moyen de tamisage (32), un appareil de nettoyage (26) qui reçoit les céréales collectées par l'élément collecteur (36), et un déchargeur par ventilation (40) qui produit un courant d'air d'aspiration, qui est guidé depuis un espace libre (34) situé entre le logement de rotor de l'unité de battage et de séparation rotative (24) et l'élément collecteur de céréales (36) autour d'une partie de la moitié arrière du logement de rotor de l'unité de battage et de séparation rotative (24), vers le déchargeur par ventilation (40),
**caractérisée en ce qu'**un conduit (42) dirige le courant d'air produit par le déchargeur par ventilation (40), qui est agencé dans un plan situé au-dessus de l'unité de battage et de séparation (24), vers le haut depuis l'espace libre (34).

2. Moissonneuse-batteuse (10) selon la revendication 1, **caractérisée en ce que** la forme du conduit (42) est définie par une paroi avant (50), une paroi arrière (52) et au moins deux autres parois latérales (54, 56).

3. Moissonneuse-batteuse (10) selon la revendication 1 ou 2, **caractérisée en ce que** la section transversale du conduit (42) est resserrée dans la direction du déchargeur par ventilation (40).

4. Moissonneuse-batteuse (10) selon l'une ou plusieurs des revendications précédentes, **caractérisée en ce qu'**un chemin pour un courant d'air est défini au-dessus de la surface d'un élément collecteur de céréales (36) par une ou plusieurs parois de section s'étendant latéralement (60', 60") qui ferment une section à vent respective jusqu'à la région supérieure d'un logement de moissonneuse et qui permettent le passage d'un courant d'air dans un espace formé entre son extrémité inférieure et la surface de l'élément collecteur de céréales (36).

5. Moissonneuse-batteuse (10) selon l'une ou plusieurs des revendications précédentes, **caractérisée en ce que** la vitesse du courant d'air dans le conduit (42) ou dans la région des espaces situés sous les parois de section (60', 60") est variable par l'intermédiaire d'un réglage d'éléments de réglage (48, 62).

6. Moissonneuse-batteuse (10) selon l'une ou plusieurs des revendications précédentes, **caractérisée en ce que** l'angle d'inclinaison de l'élément collecteur de céréales (16) est variable.

7. Moissonneuse-batteuse (10) selon l'une ou plusieurs des revendications précédentes, **caractérisée en ce que** le mélange d'air, de paille hachée et de paille est évacué par le déchargeur par ventilation (24) par soufflage dans une conduite dirigée vers le bas (70).

8. Moissonneuse-batteuse (10) selon la revendication 7, **caractérisée en ce que** dans la conduite dirigée vers le bas (70) sont disposées des aubes de guidage (72).

9. Moissonneuse-batteuse (10) selon la revendication 7 ou 8, **caractérisée en ce que** dans la conduite dirigée vers le bas (70) sont positionnés des capteurs de perte (74).

10. Moissonneuse-batteuse (10) selon l'une ou plusieurs des revendications 1 à 6, **caractérisée en ce qu'**un déchargeur par ventilation (10) est placé sur le côté ou sous l'unité de battage et de séparation (24), et le déchargeur par ventilation (40) est connecté au conduit (10) par une conduite de connexion dirigée vers le bas (70).

11. Moissonneuse-batteuse (10) selon la revendication 10, **caractérisée en ce que** le déchargeur par ventilation (40) introduit le mélange d'air, de menue paille et de paille courte dans un hacheur (82) par l'intermédiaire d'une conduite de liaison (80).

12. Moissonneuse-batteuse (10) selon l'une ou plusieurs des revendications précédentes, **caractérisée en ce qu'**il y a un angle entre la direction générale du courant d'air dans l'espace libre (34) situé sous l'unité de battage et de séparation (24) et la direction générale du courant d'air dans le conduit (42).

13. Moissonneuse-batteuse (10) équipée d'une unité de battage et de séparation rotative (24), qui consiste en au moins un logement de rotor muni d'un moyen de tamisage (32) comportant des ouvertures de tamis et un élément de rotor qui est placé de façon à être entraîné en rotation à l'intérieur du logement de rotor, un élément collecteur de céréales (36) qui est placé à une certaine distance vers le moyen de tamisage (32), un appareil de nettoyage (26) qui reçoit les céréales collectées par l'élément collecteur (36), l'appareil de nettoyage (26) ayant un premier endroit de déchargement pour la menue paille et la paille courte, et un déchargeur par ventilation (40) qui produit un courant d'air d'aspiration,
**caractérisée en ce que**, à côté du premier endroit de déchargement pour la menue paille et la paille courte, derrière l'appareil de nettoyage (26), se trouve un deuxième endroit de déchargement pour la menue paille et la paille courte qui sont aspirées dans une région située sous l'unité de battage et de séparation (24) par le déchargeur par ventilation (40) par l'intermédiaire d'un conduit (42), et qui envoie un mélange d'air, de menue paille et de paille courte à travers une conduite (80) soit sur le sol, soit dans un hacheur (82) au niveau d'un deuxième endroit de déchargement.

14. Moissonneuse-batteuse (10) selon l'une ou plusieurs des revendications précédentes, **caractérisée en ce que** le déchargeur par ventilation (24) peut être mis en marche ou arrêté.

15. Moissonneuse-batteuse (10) selon l'une ou plusieurs des revendications précédentes, **caractérisée en ce que** la conduite (42, 70, 80) peut être offerte en tant qu'ensemble de modification.

16. Moissonneuse-batteuse (10) selon l'une ou plusieurs des revendications précédentes, **caractérisée en ce que** des ouvertures d'entrée d'air sont prévues dans la partie avant, les parois latérales ou la partie supérieure du logement de la moissonneuse (10).

17. Moissonneuse-batteuse (10) selon l'une ou plusieurs des revendications précédentes, **caractérisée en ce qu'**un élément de guidage (90) est prévu, placé dans la zone de transfert de l'élément collecteur de céréales (36) et d'un plancher de préparation (92) vers l'appareil de nettoyage (26), et l'élément de guidage (90) est fixé à proximité d'un canal de sortie (94) d'un déchargeur (28) de l'appareil de nettoyage (26) et est dirigé vers l'espace libre (34) à travers lequel un courant d'air est aspiré par le déchargeur par ventilation (24).
